# EUROPEAN PATENT APPLICATION

(11) **EP 2 604 827 A2**
(43) Date of publication of application: **19.06.2013**
(21) Application number: 12196169.2
(22) Date of filing: 07.12.2012
(51) Int. Cl.: F02C 7/268, F02C 7/32

(54) **Gas turbine engine transient assist using a starter-generator**

(30) Priority: 13.12.2011 US 201113324789
(71) Applicant: Honeywell International Inc., Morristown, NJ 07962-2245 (US)
(72) Inventor: Condon, Kevin, Morristown, NJ New Jersey 07962-2245 (US); Bozarth, Dwight, Morristown, NJ New Jersey 07962-2245 (US); Dalton, Kendall Keith, Morristown, NJ New Jersey 07962-2245 (US); Anghel, Cristian, Morristown, NJ New Jersey 07962-2245 (US); Kurschat, Ernest, Morristown, NJ New Jersey 07962-2245 (US)
(74) Representative: Houghton, Mark Phillip

(57) **Abstract**

A method of supplying mechanical power to an operating gas turbine engine includes supplying mechanical power from the operating gas turbine engine to a starter-generator, to thereby generate electrical power using the starter-generator. One or more operational parameters of the operating gas turbine engine are sensed and, based on the one or more sensed operational parameters, electrical power is selectively supplied to the starter-generator to thereby generate and supply mechanical output power to the operating gas turbine engine.

## Description

### TECHNICAL FIELD

The present invention generally relates to gas turbine engines, and more particularly relates to a system and method for providing assistance to a gas turbine engine during transients, using the gas turbine engine starter-generator.

### BACKGROUND

A gas turbine engine may be used to supply power to various types of vehicles and systems. For example, gas turbine engines may be used to supply propulsion power for various types of vehicles, including various types of helicopters and various types of aircraft. Also, a gas turbine engine may be used as an auxiliary power unit (APU) to provide electrical power or air to an aircraft. Many gas turbine engines include at least three major sections, a compressor section, a combustor section, and a turbine section. The compressor section receives a flow of intake air and raises the pressure of this air to a relatively high level. The compressed air from the compressor section then enters the combustor section, where fuel nozzles inject a steady stream of fuel. The injected fuel is ignited by a burner, which significantly increases the energy of the compressed air. The high-energy compressed air from the combustor section then flows into and through the turbine section, causing rotationally mounted turbine blades to rotate and generate energy. The air exiting the turbine section is then exhausted from the engine. Similar to the compressor section, in a multi-spool engine the turbine section may include a plurality of turbines. The energy generated in each of the turbines may be used to power other portions of the engine as well as leftover energy providing thrust.

During some transient maneuvers, in helicopter, aircraft, and other vehicular environments, the speed of the gas turbine propulsion engine may undesirably decrease. Such undesirable decreases can be on the order of 10-20 percent, and can cause a concomitant and undesirable decrease in aircraft speed and/or altitude. Some engine control systems may not respond fast enough to prevent or alleviate such engine speed reduction. Moreover, sizing the engines to provide sufficient margin for potential speed reductions may be undesirable.

Hence, there is a need for a system and method that prevents, or at least alleviates, reductions in propulsion engine speed during various maneuvers without having to completely redesign the control system and/or oversizing the engine. The present invention addresses at least this need.

### BRIEF SUMMARY

In one embodiment, a method of supplying mechanical power to an operating gas turbine engine includes supplying mechanical power from the operating gas turbine engine to a starter-generator, to thereby generate electrical power using starter-generator. One or more operational parameters of the operating gas turbine engine are sensed. Based on the one or more sensed operational parameters, electrical power is selectively supplied to the starter-generator to thereby generate and supply mechanical output power to the operating gas turbine engine.

In another embodiment, a method of supplying mechanical power to an operating gas turbine engine that is controlled, at least in part, by positioning an engine throttle includes supplying mechanical power from the operating gas turbine engine to a starter-generator, to thereby generate electrical power using starter-generator;. sensing a position of the engine throttle. Based at least on the sensed position of the engine throttle, electrical power is selectively supplied to the starter-generator to thereby generate and supply mechanical output power to the operating gas turbine engine.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figure, wherein like numerals denote like elements, and wherein:

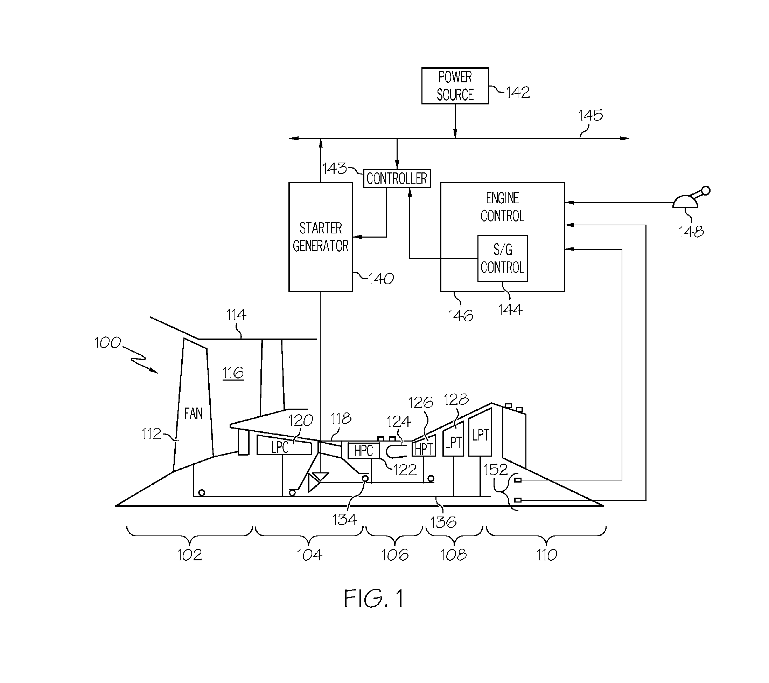

FIG. 1 depicts a simplified schematic representation of an exemplary turbofan gas turbine engine control system.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

In this regard, although the following description is directed to an aircraft turbofan gas turbine propulsion engine, it will be appreciated that numerous gas turbine engine configurations and implementations may be used. For example, the gas turbine engine could be used to drive one or more rotors of a helicopter, the gas turbine engine may be implemented as an APU, or the gas turbine engine may be used to supply power to any one of numerous other types of waterborne, airborne, or terrestrial vehicles.

Turning now to the description, a simplified representation of an exemplary multi-spool turbofan gas turbine jet engine 100 is depicted in FIG. 1, and includes an intake section 102, a compressor section 104, a combustion section 106, a turbine section 108, and an exhaust section 110. The intake section 102 includes a fan 112, which is mounted in a fan case 114. The fan 112 draws air into the intake section 102 and accelerates it. A fraction of the accelerated air exhausted from the fan 112 is directed through a bypass section 116 (shown only partially in FIG. 1) disposed between the fan case 114 and an engine case 118, and provides a forward thrust. The remaining fraction of air exhausted from the fan 112 is directed into the compressor section 104.

The compressor section 104 includes two compressors, a low pressure compressor 120, and a high pressure compressor 122. The low pressure compressor 120 raises the pressure of the air directed into it from the fan 112, and directs the compressed air into the high pressure compressor 122. The high pressure compressor 122 compresses the air still further, and directs the high pressure air into the combustion section 106. In the combustion section 106, which includes a combustor 124, a plurality of non-illustrated fuel injectors, and one or more non-illustrated igniters, the high pressure air is mixed with fuel and combusted. The combusted air is then directed into the turbine section 108.

The turbine section 108 includes two turbines, a high pressure turbine 126 and a low pressure turbine 128, disposed in axial flow series in the engine case 118. The combusted air from the combustion section 106 expands through each turbine 126 and 128, causing each to rotate. The air is then exhausted through a propulsion nozzle disposed in the exhaust section 110, providing addition forward thrust. As the turbines 126 and 128 rotate, each drives equipment in the engine 100 via concentrically disposed shafts or spools. For example, the low pressure turbine 128 drives the fan 112 and the low pressure compressor 120 via a low pressure spool 136, and the high pressure turbine 126 drives the high pressure compressor 122 via a high pressure spool 134.

As FIG. 1 also depicts, a starter-generator 140 is coupled to the engine 100. In the depicted embodiment, the starter-generator 140 is coupled to the high pressure spool 134 via appropriate gearing. It will be appreciated, however, that the starter-generator 140 could instead (or additionally) be coupled to the low pressure spool 132. In any case, the starter-generator 140 is configured to operate in one of two modes - a motor mode or a generate mode. In the motor mode, the starter-generator receives electrical power from an electrical power source 142, via a power bus 145 and a suitable power controller 143, and converts the supplied electrical power to mechanical output power. It may thus be appreciated that the starter-generator 140 may be used to rotate the engine 100 during start-up. In the generate mode, the starter-generator receives mechanical power from the engine 100, converts the mechanical power to electrical power, and supplies the electrical power to, for example, the power bus 145. The starter-generator 140 may be implemented using any one of numerous types of starter-generators. In the depicted embodiment, however, it is implemented using brushless, wound field synchronous generator, alternating current machine.

The operational mode and control of the starter-generator 140 may be controlled by a starter-generator control 144. The starter-generator control 144 may be implemented as a separate, individual device or integrated into another device. In the embodiment depicted in FIG. 1, the starter-generator control 144 is integrated into an engine control 146, an embodiment of which will now be described.

The engine control 146 controls the overall operation of the engine 100. The engine control 146, as is generally known, is used to control the output power of the engine 100 by, for example, controlling fuel flow rate to the engine 100. In the depicted embodiment, the engine control 146 receives a throttle position signal from an engine throttle 148, and signals from a plurality of sensors 152 that are disposed at various locations on and within the engine 100. The sensors 152 are used to sense various operational parameters associated with the engine 100 such as, for example, various temperatures, speeds, and air flow, and supply signals representative of the sensed parameters to the engine control 146. The engine control 146 processes the signals received from the engine throttle 148 and the sensors 152 and, among other things, supplies various commands to the engine 100 to control its operation. It will be appreciated that the engine control 146 may be any one of numerous types of engine controllers such as, for example, a FADEC (Full Authority Digital Engine Controller). As will now be described, the engine control 146 also controls the operational mode of the starter-generator 140 during operation of the engine 100.

During some aircraft transients, the increased load on the engine 100 may cause its rotational speed, and concomitantly its generated thrust or power, to undesirably decrease. Thus, during operation of the engine 100, the engine control 146 is additionally configured to selectively command the starter-generator control 144 to switch the operational mode of the starter-generator 140. That is, to selectively switch the starter-generator 140 from operating in the generate mode to operating in the motor mode. As a result, instead of receiving mechanical power from the engine 100, and converting the mechanical power to electrical power, the starter-generator 140 will receive electrical power, and convert the electrical power to mechanical output power and supply the mechanical output power to the engine 100.

The engine control 146 will, more specifically, be configured to determine when the engine 100 is not delivering the commanded thrust or power. The engine control 146 is additionally configured, upon making this determination, to supply a command to the starter-generator control 144 to switch the operational mode of the starter-generator 140. Because, as was noted above, the starter-generator 140 is coupled to the high pressure spool 134 (and/or other appropriate spool), the mechanical output power supplied from the starter-generator 140 to the engine 100 is sufficient to reduce the decrease, or at least substantially reduce the decrease, of the engine 100 speed, thrust, or power. When the mechanical power from the starter-generator 140 is no longer needed, the engine control 146 will supply a command to the starter-generator control 144 to switch the operational mode of the starter-generator 140 back to the generate mode.

The engine control 146 may be configured to determine when the engine 100 is not delivering the commanded thrust or power using any one of numerous techniques. For example, the engine control 146 may be configured to make this determination based on one or more of the sensed operational parameters of the engine 100, such as engine speed. With this implementation, if the sensed rotational speed is less than a predetermined value, or is decreasing at too great of a rate, then the starter-generator control 144 is commanded to switch the operational mode of the starter-generator 140 to the motor mode.

In another embodiment, the engine control 146 may be configured to implement anticipatory logic. With this embodiment, the engine control 146 may be configured to sense the position, or rate of change of position, of the engine throttle 148 and, based on the sensed position (or rate of change of position) and one or more of the sensed operational parameters, anticipatorily determine if the engine 100 will experience a speed/thrust droop. If the anticipatory logic determines that the engine 100 will experience a speed/thrust droop, the engine control 146 will then command the starter-generator control 144 to switch the operational mode of the starter-generator 140.

In some implementations, the engine 100 may not experience a droop or decrease in speed during some transients. In these implementations, however, the engine control 146 may still command the starter-generator control 144 to selectively switch the operational mode of the starter-generator 140. For example, during a transient maneuver the engine control 146 may command the starter-generator control 144 to switch the operational mode of the starter-generator 140 from the generate mode to the motor mode in order to improve the acceleration time of the engine 100.

The gas turbine engine control system and method described herein prevents, or at least alleviates, reductions in gas turbine engine speed during various load changes, and/or improves acceleration times of the gas turbine engine during various load changes.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of supplying mechanical power to an operating gas turbine engine, comprising the steps of:
supplying mechanical power from the operating gas turbine engine to a starter-generator, to thereby generate electrical power using the starter-generator;
sensing one or more operational parameters of the operating gas turbine engine; and
based on the one or more sensed operational parameters, ceasing to generate electrical power using the starter-generator, and instead supplying electrical power to the starter-generator to thereby generate and supply mechanical output power to the operating gas turbine engine.

2. The method of Claim 1, wherein the one or more sensed operational parameters includes a rotational speed of the operating gas turbine engine.

3. The method of Claim 2, further comprising:
determining when the sensed rotational speed of the operating gas turbine engine is less than a predetermined value; and
supplying the electrical power to the starter-generator when the sensed rotational speed is less than the predetermined value.

4. The method of Claim 1, wherein the gas turbine engine is controlled, at least in part, by positioning an engine throttle, and wherein the method further comprises:
sensing a position of the engine throttle; and
selectively supplying the electrical power to the starter-generator based additionally on the sensed position of the engine throttle.

5. The method of Claim 4, further comprising:
sensing a rate of change of position of the engine throttle; and
selectively supplying the electrical power to the starter-generator based additionally on the sensed rate of change of position of the engine throttle.

6. A method of supplying mechanical power to an operating gas turbine engine that is controlled, at least in part, by positioning an engine throttle, the method comprising the steps of:
supplying mechanical power from the operating gas turbine engine to a starter-generator, to thereby generate electrical power using starter-generator;
sensing a position of the engine throttle; and
based at least on the sensed position of the engine throttle, ceasing to generate electrical power using the starter-generator, and instead supplying electrical power to the starter-generator to thereby generate and supply mechanical output power to the operating gas turbine engine.

7. The method of Claim 6, further comprising:
sensing a rate of change of position of the engine throttle; and
selectively supplying the electrical power to the starter-generator based additionally on the sensed rate of change of position of the engine throttle

8. The method of Claim 6, further comprising:
sensing one or more operational parameters of the operating gas turbine engine; and
selectively supplying electrical power to the starter-generator based additionally on the one or more sensed operational parameters.

9. The method of Claim 8, wherein the one or more sensed operational parameters includes a rotational speed of the operating gas turbine engine.

10. The method of Claim 9, further comprising:
determining when the sensed rotational speed of the operating gas turbine engine is less than a predetermined value; and
supplying the electrical power to the starter-generator when the sensed rotational speed is less than the predetermined value.
